# EUROPÄISCHE PATENTSCHRIFT

(11) **EP 1 660 337 B1**
(45) Veröffentlichungstag und Bekanntmachung des Hinweises auf die Patenterteilung: **17.12.2008**
(21) Anmeldenummer: 04763783.0
(22) Anmeldetag: 04.08.2004
(51) Int. Cl.: B60H 1/00

(54) **KLIMAANLAGE**
AIR-CONDITIONING SYSTEM
SYSTEME DE CLIMATISATION

(30) Priorität: 28.08.2003 DE 10340041
(43) Veröffentlichungstag der Anmeldung: 31.05.2006
(73) Patentinhaber: Behr GmbH & Co. KG, 70469 Stuttgart (DE)
(72) Erfinder: BERNDT, Ralf, 71254 Ditzingen (DE)
(74) Vertreter: Nestler, Jan Hendrik
(86) Internationale Anmeldenummer: PCT/EP2004/008733
(87) Internationale Veröffentlichungsnummer: WO 2005/028223

(56) Entgegenhaltungen:
- EP-A- 0 714 797
- EP-A- 0 863 030
- WO-A-00/18605
- DE-A- 19 524 668
- DE-A- 19 719 258
- FR-A- 2 742 815
- US-A- 4 328 859

## Beschreibung

Die Erfindung betrifft eine Klimaanlage, insbesondere für ein Kraftfahrzeug, gemäß dem Oberbegriff des Anspruchs 1, und wie offenbart in FR 2 742 815.

Bei herkömmlichen Klimaanlagen wird der Verdampfer mit Hilfe von weichen Dichtelementen, insbesondere aufgeklebte Schaumstoffstreifen oder Profildichtungen, gegenüber dem Klimaanlagengehäuse abgedichtet. Hierbei kommt es insbesondere bei der Verwendung von Schaumstoffstreifen zu Geruchsproblemen, da die Schaumstoffstreifen Staubpartikel aufnehmen, die auf Grund der feucht-warmen Umgebung nach einiger Zeit unangenehme Gerüche absondern.

Es ist Aufgabe der Erfindung, eine verbesserte Klimaanlage zur Verfügung zu stellen.

Diese Aufgabe wird gelöst durch eine Klimaanlage mit den Merkmalen des Anspruchs 1. Vorteilhafte Ausgestaltungen sind Gegenstand der Unteransprüche.

Erfindungsgemäß ist eine Klimaanlage für ein Kraftfahrzeug mit einem in einem Klimaanlagengehäuse angeordneten Verdampfer und mindestens einer Einfassung, die an einer der kurzen Seitenflächen des Verdampfers angebracht ist und einen Toleranzausgleich ermöglicht, vorgesehen, wobei die Einfassung aus einem relativ harten, eigenstabilen, selbsttragenden Material besteht, im Gegensatz zu den aufgeklebten Dichtelementen gemäß dem Stand der Technik. Dabei übernimmt die Einfassung im Wesentlichen die Dichtfunktion. Bevorzugt ist an jeder der kurzen Seitenflächen des Verdampfers je eine Einfassung angebracht. Es sind keine zusätzlichen weichen Dichtelemente erforderlich, die Staubpartikel aufnehmen und unangenehme Gerüche abgeben. Durch die Einfassungen, die angeclipst werden, entfällt das Bekleben des Verdampfers mit Schaumstoffstreifen. Ferner sind entsprechende Profile, wie Schwalbenschwanz-, U-, V-, T-Profile, möglich.

Die Einfassung weist mindestens einen in Längsrichtung verlaufenden und entgegen der Richtung zum Verdampfer ausgerichteten Rand auf, welcher in einer entsprechend ausgebildeten Nut im Klimaanlagengehäuse angeordnet ist. Durch die Enge der Spalten zwischen Einfassung und Klimaanlagengehäuse erfolgt eine relativ gute Abdichtung entlang den kurzen Seitenflächen des Verdampfers.

Die Einfassung weist mindestens einen, vorzugsweise zwei. in Längsrichtung verlaufende und entgegen der Richtung zum Verdampfer erhabene wellenartige Bereiche auf.

Bevorzugt ist in ebenen Bereichen, welche keine tragende Funktion und keine direkte Dichtfunktion haben, mindestens eine Öffnung zur Material- und Gewichtsersparnis vorgesehen.

Die Einfassung besteht vorzugsweise aus einem Kunststoff, insbesondere PP-TV20 (Polypropylen mit 20% Talkum) oder POM (Polyoxymethylen), oder aus Metall, es können jedoch auch Gummimischungen verwendet werden. Diese Materialien nehmen keine Staubpartikel auf, so dass unangenehme Gerüche von vornherein vermieden werden.

Vorzugsweise sind am Klimaanlagengehäuse Ausgleichsrippen vorgesehen. Diese sind insbesonder im Bereich der langen schmalen Seitenfläche, das heißt im Bereich der Tanks des Verdampfers, angeordnet und verlaufen in Richtung der kurzen Seitenflächen (Z-Richtung). Die Ausgleichsrippen dienen dem Toleranzausgleich in Z-Richtung.

Im Folgenden wird die Erfindung anhand eines Ausführungsbeispiels unter Bezugnahme auf die Zeichnung im Einzelnen erläutert. In der Zeichnung zeigen:
- Fig. 1: eine Ansicht eines Klimaanlagengehäuses einer Klimaanlage, welches einen Verdampfer aufnimmt,
- Fig. 2: einen Schnitt durch das Klimaanlagengehäuse von Fig. 1 mit eingebautem Verdampfer,
- Fig. 3: eine perspektivische Ansicht des Klimaanlagengehäuses von Fig. 1 mit eingebautem Verdampfer,
- Fig. 4: einen weiteren Schnitt durch das Klimaanlagengehäuse von Fig. 1 mit eingebautem Verdampfer,
- Fig. 5: eine perspektivische Ansicht des Verdampfers mit Einfassung und ohne Klimaanlagengehäuse, und
- Fig. 6: eine Detailansicht von Fig. 2.

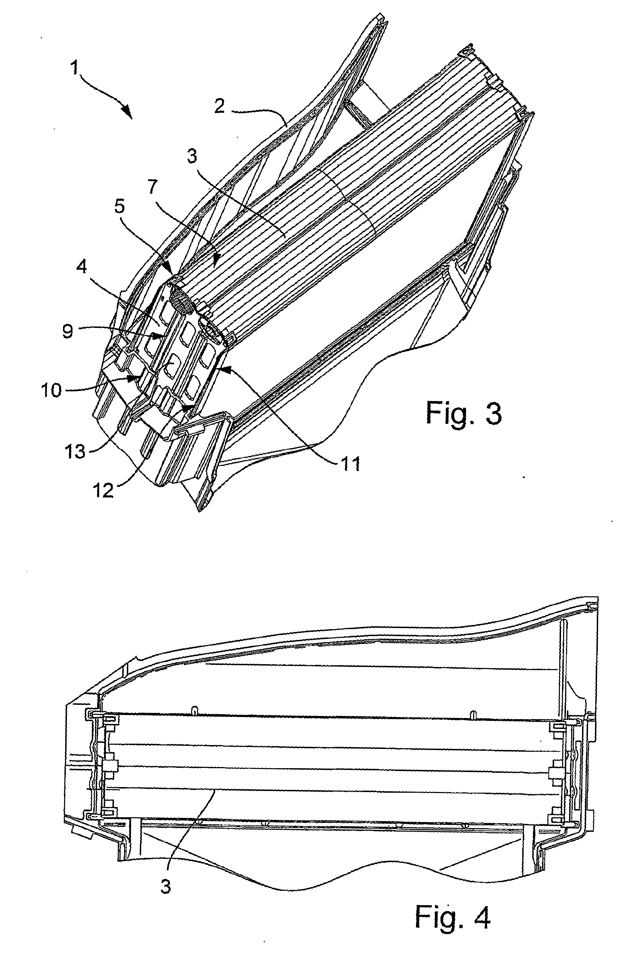

Eine erfindungsgemäße Klimaanlage 1 weist ein einen in einem Klimaanlagengehäuse 2 angeordneten Verdampfer 3 auf. Im Folgenden wird die normale Luftströmungsrichtung, in Fig. 3 durch einen Pfeil angedeutet, als X-Richtung, die Längsrichtung des Verdampfers 3 als Y-Richtung und die normale Einbaurichtung des Verdampfers 3 als Z-Richtung bezeichnet. Hieraus ergeben sich auch die Bezeichnungen für die entsprechenden Ebenen XY-Ebene, YZ-Ebene und XZ-Ebene.

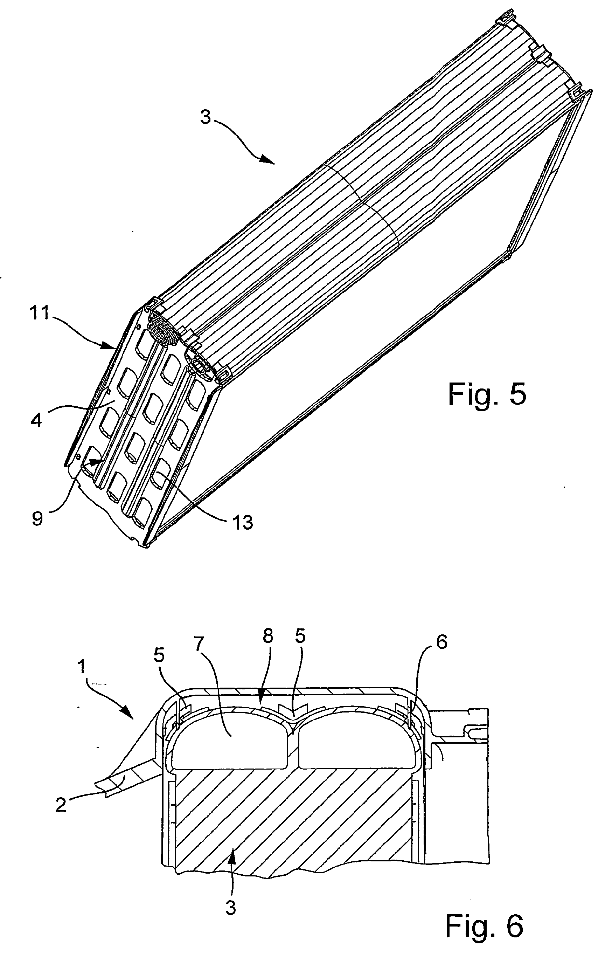

An den kurzen Seitenflächen des Verdampfers 3, das heißt jeweils in der XZ-Ebene an den beiden Enden des Verdampfers 3, sind Einfassungen 4 vorgesehen, welche eine abdichtende und toleranz-ausgleichende Funktion haben. Die Einfassungen 4 bestehen gemäß dem Ausführungsbeispiel aus PP-TV20 und sind mit dem Verdampfer 3 verclipst, wofür an den Einfassungen sechs Federarme 5 vorgesehen sind, welche den Verdampfer 3 um- und teilweise hintergreifen, so dass eine einfache und sichere Verbindung zwischen den Einfassungen 4 und dem Verdampfer 3 gewährleistet ist. Hierbei ist der jeweils mittlere Federarm 5' V-förmig ausgebildet, wobei er lediglich unter gewisser Vorspannung von oben bzw. unten an dem Verdampfer 3 anliegt und die Einfassung 4 positioniert (siehe Fig. 6). Die anderen, äußeren Federarme 5 weisen je einen Vorsprung auf, welcher je einen am Verdampfer 3 vorgesehenen Vorsprung, vorliegend in Form einer Rippe, hintergreift.

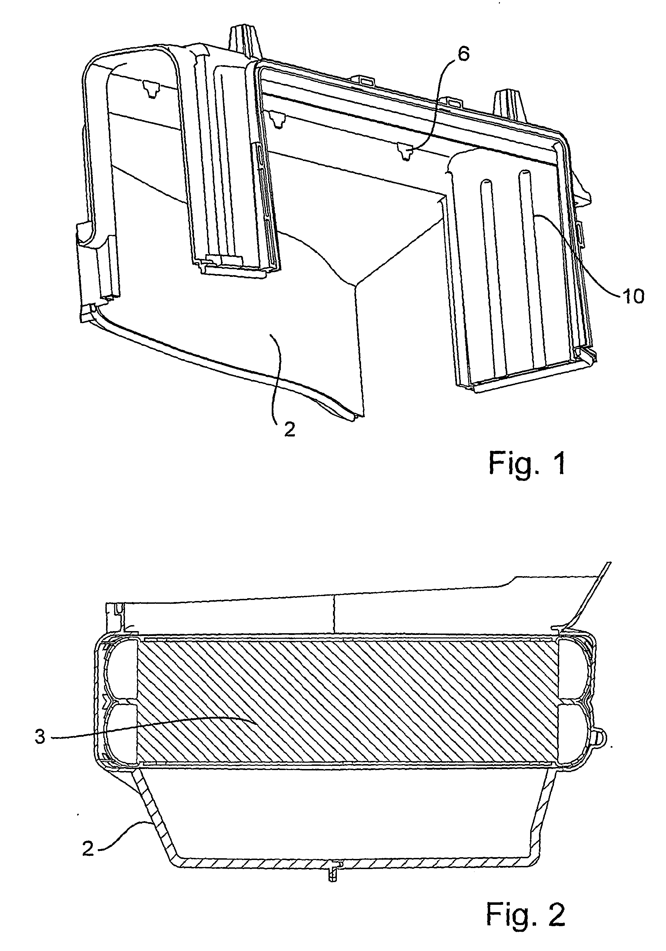

Die Einfassungen 4 nehmen Maßabweichungen im Rahmen des Toleranzbereichs des Verdampfers 3 in X- und Y-Richtung im Klimaanlagengehäuse 2 auf. Zum Toleranzaugsleich in Z-Richtung sind im Klimaanlagengehäuse 2 Ausgleichsrippen 6 vorgesehen (siehe Fig. 1 und 6). Dabei sind die in Längsrichtung oben und unten am Verdampfer 3 angeordneten Tanks 7 in speziellen Aufnahmen 8 angeordnet, die im Klimaanlagengehäuse 2 vorgesehen sind.

Für ein vereinfachtes Einführen des Verdampfers 3 mit Einfassungen 4 sowie gutes Anliegen und Positionieren am Klimaanlagengehäuse 2 weist jede der Einfassungen 3 zwei in Z-Richtung verlaufende wellenartig vorstehende Bereiche 9 auf, welche in entsprechend ausgebildete wellenartige Vertiefungen 10 des Klimaanlagengehäuses 2 angeordnet sind. Ferner stehen zur verbesserten Abdichtung die Längsseiten der Einfassungen 4 vom Verdampfer 3 in Y-Richtung unter Bildung eines Randes 11 ab und sind in entsprechend ausgebildeten Nuten 12 des Klimaanlagengehäuses 2 angeordnet (siehe Fig. 3). Zwischen den Rändern 11 und den wellenartig vorstehenden Bereichen 9 sind drei Reihen langlochartiger Öffnungen 13 in den Einfassungen 4 ausgebildet, welche der Materialersparnis und somit auch der Gewichtsreduzierung dienen.

### Bezugszeichenliste

- 1: Klimaanlage
- 2: Klimaanlagengehäuse
- 3: Verdampfer
- 4: Einfassung
- 5: Federarm
- 5': mittlerer Federarm
- 6: Ausgleichsrippe
- 7: Tank
- 8: Aufnahme
- 9: wellenartig vorstehender Bereich
- 10: wellenartige Vertiefung
- 11: Rand
- 12: Nut
- 13: Öffnung

## Patentansprüche

1. Klimaanlage für ein Kraftfahrzeug mit einem in einem Klimaanlagengehäuse (2) angeordneten Verdampfer (3), wobei mindestens eine Einfassung (4) an einer der kurzen Seitenflächen des Verdampfers (3) angebracht ist, die einen Toleranzausgleich ermöglicht, weiterhin die Einfassung (4) mindestens einen in Längsrichtung verlaufenden und entgegen der Richtung zum Verdampfer (3) ausgerichteten Rand (11) aufweist, welcher in einer entsprechend ausgebildeten Nut (12) im Klimaanlagengehäuse (2) angeordnet ist und die Einfassung (4) mindestens einen in Längsrichtung verlaufenden und entgegen der Richtung zum Verdampfer (3) erhabenen wellenartigen Bereich (9) aufweist **dadurch gekennzeichnet, dass** die Einfassung (4) am Verdampfer (3) angeclipst ist und dazu die Einfassung (4) Federarme (5) aufweist, die am Verdampfer (3) vorgesehene Vorsprünge hintergreifen.

2. Klimaanlage nach einem der vorhergehenden Ansprüche, **dadurch gekennzeichnet, dass** die Einfassung (4) mindestens eine Öffnung (13) aufweist.

3. Klimaanlage nach einem der vorhergehenden Ansprüche, **dadurch gekennzeichnet, dass** die Einfassung (4) aus einem Kunststoff oder Metall gefertigt ist.

4. Klimaanlage nach Anspruch 3, **dadurch gekennzeichnet, dass** der Kunststoff PP-TV20 oder POM ist.

5. Klimaanlage nach einem der vorhergehenden Ansprüche, **dadurch gekennzeichnet, dass** zwei Einfassungen (4) an den gegenüberliegenden kurzen Seitenflächen des Verdampfers (3) angeordnet sind.

6. Klimaanlage nach Anspruch 5, **dadurch gekennzeichnet, dass** die Einfassungen (4) gleich ausgebildet sind.

7. Klimaanlage nach einem der vorhergehenden Ansprüche, **dadurch gekennzeichnet, dass** am Klimaanlagengehäuse (2) Ausgleichsrippen (6) vorgesehen sind.

## Claims

1. Air conditioning system for a motor vehicle, with an evaporator (3) located in an air conditioner housing (2), wherein at least one trim (4) permitting a compensation of tolerances is fitted to one of the short side faces of the evaporator (3), and wherein the trim (4) further includes at least one edge (11) extending in the longitudinal direction and oriented against the direction towards the evaporator (3), the said edge being accommodated in a correspondingly designed groove (12) in the air conditioner housing (2), and wherein the trim (4) includes at least one corrugated region (9) extending in the longitudinal direction and raised against the direction towards the evaporator (3), **characterised in that** the trim (4) is clipped to the evaporator (3), for which purpose the trim (4) is provided with spring arms (5), which engage projections provided on the evaporator (3) from behind.

2. Air conditioning system according to any of the preceding claims, **characterised in that** the trim (4) has at least one opening (13).

3. Air conditioning system according to any of the preceding claims, **characterised in that** the trim (4) is made of a plastic material or of metal.

4. Air conditioning system according to claim 3, **characterised in that** the plastic material is PP-TV20 or POM.

5. Air conditioning system according to any of the preceding claims, **characterised in that** two trims (4) are provided on the opposite short side faces of the evaporator (3).

6. Air conditioning system according to claim 5, **characterised in that** the trims (4) are designed identically.

7. Air conditioning system according to any of the preceding claims, **characterised in that** compensation fins (6) are provided on the air conditioner housing (2).

## Revendications

1. Système de climatisation pour un véhicule automobile comprenant un évaporateur (3) disposé dans un carter de système de climatisation (2), où au moins un cadre (4) est fixé sur l'une des surfaces latérales courtes de l'évaporateur (3), cadre qui permet une compensation de tolérance, le cadre (4) présentant en outre au moins un bord (11) s'étendant dans le sens longitudinal et orienté dans le sens inverse par rapport à l'évaporateur (3), bord qui est disposé dans une rainure (12) configurée en conséquence dans le carter (2) du système de climatisation, et le cadre (4) présente au moins une zone (9), en relief et de forme ondulée, s'étendant dans le sens longitudinal et en sens inverse par rapport à l'évaporateur (3),
**caractérisé en ce que** le cadre (4) est clipsé sur l'évaporateur (3) et, pour ce faire, le cadre (4) présente des bras ressorts (5) qui s'engagent derrière des parties saillantes prévues sur l'évaporateur (3).

2. Système de climatisation selon la revendication 1, **caractérisé en ce que** le cadre (4) présente au moins une ouverture (13).

3. Système de climatisation selon l'une ou l'autre des revendications précédentes, **caractérisé en ce que** le cadre (4) est fabriqué en matière plastique ou en métal.

4. Système de climatisation selon la revendication 3, **caractérisé en ce que** la matière plastique est du polypropylène du type PP-TV20 ou du polyoxyméthylène (POM).

5. Système de climatisation selon l'une quelconque des revendications précédentes, **caractérisé en ce que** deux cadres (4) sont disposés sur des surfaces latérales courtes opposées de l'évaporateur (3).

6. Système de climatisation selon la revendication 5, **caractérisé en ce que** les cadres (4) sont configurés de façon identique.

7. Système de climatisation selon l'une quelconque des revendications précédentes, **caractérisé en ce qu'**il est prévu des pattes de réglage (6) sur le carter (2) du système de climatisation.
